# EUROPEAN PATENT APPLICATION

(11) **EP 4 717 346 A1**
(43) Date of publication of application: **01.04.2026**
(21) Application number: 24202993.2
(22) Date of filing: 26.09.2024
(51) Int. Cl.: B01D 53/94, B01J 23/63, B01J 35/00, B01J 35/57, B01J 37/02, B01J 37/14

(54) **METHOD FOR THE MANUFACTURE OF A CATALYTIC GASOLINE PARTICULATE FILTER**

(71) Applicant: Johnson Matthey Public Limited Company, London EC2V 7AD (GB)
(72) Inventor: BENET RAJKUMAR, Brenda, Royston, SG8 5HE (GB); WARREN, Sarah, Royston, SG8 5HE (GB)
(74) Representative: Boult Wade Tennant LLP

(57) **Abstract**

Provided is a method for the manufacture of a catalytic gasoline particulate filter (GPF) for the treatment of exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
(ii) providing a first washcoat slurry comprising: (a) a polyacrylate, (b) a first platinum group metal selected from the group consisting of Pt, Pd, Rh and mixtures thereof, (c) a first oxygen storage capacity (OSC) material, and (d) a first inorganic oxide support;
(iii) providing a second washcoat slurry comprising: (a) an organic pore former, (b) optionally a second platinum group metal selected from the group consisting of Pt, Pd, Rh and mixtures thereof, (c) optionally a second oxygen storage capacity (OSC) material, and (d) optionally a second inorganic oxide support;
(iv) coating the wall-flow filter substrate with the first washcoat slurry from the second face to form a first coating disposed within the porous walls and extending from the second face for at least 50% of a length of the second plurality of channels;
(v) coating the wall-flow filter substrate with the second washcoat slurry from the first face to form a second coating disposed on the first plurality of inner surfaces and extending from the first face for at least 70% of a length of the first plurality of channels; and
(vi) calcining the first coating and the second coating to form the catalytic GPF.

## Description

The present invention relates to a method for the manufacture of a catalytic gasoline particulate filter (GPF) for the treatment of exhaust gas from a gasoline engine, a catalytic GPF obtained or obtainable by such a method, an emission treatment system and a method for treating an exhaust gas from a gasoline engine. The catalytic GPF provides high catalytic activity and filtration efficiency while maintaining low backpressure.

GPFs are an emission after-treatment technology developed to control particulate emissions from gasoline direct injection (GDI) engines.

Most early GPF applications included an uncoated GPF positioned downstream of a three-way catalyst (TWC). As the technology matured, GPFs have been coated with a three-way catalyst. See, for example, US2009/0193796A1, US2010/0239478A1, US2019/0009254A1, US2019/0168162A1, and US2020/0353410A1. However, the combination of the TWC washcoat on a filter body does introduce additional issues such as undue backpressure, and there are requirements for minimum CO, NOx and HC conversion properties. In addition, there are cost considerations with a need to provide the best possible balance of performance to cost.

There is a continued need for improving technologies to effectively convert CO, NOx and HC and to reduce particulate matter in exhaust gas from a gasoline engine, without compromising on backpressure.

US2009/0044521A1 discloses an exhaust gas catalyst comprising a support and a plurality of layers formed thereon, wherein at least one of the plurality of layers contains voids therewithin and at least one of the plurality of layers comprises catalyst components.

US2017/0304810A1 discloses a method of coating a substrate with a foam. The method comprises: (a) introducing a foam into a substrate comprising a plurality of channels through open ends of the channels at a first end of the substrate; and (b) optionally applying (i) a vacuum to open ends of the channels at a second end of the substrate and/or (ii) a pressure to the open ends of the channels at the first end of the substrate; wherein the foam comprises a particulate material, and wherein the foam is particle stabilized.

US2022/0280930A1 discloses a method for producing a porous coating on carrier substrates by providing a coating suspension which has at least one inorganic coating material and at least one polymeric organic pore former, characterized in that the polymeric pore former is composed of water-insoluble swollen particles having a water content of 40 wt% to 99.5 wt%, coating the carrier substrate with the coating suspension, and drying and calcining the coated carrier substrate.

US2022/0410129A1 discloses a catalyst washcoat composition comprising a slurry comprising at least one platinum group metal and/or at least one non-platinum group metal supported on at least one support; and at least one pore forming agent having a particle size ranging from 100 nm to 5.0 µm, wherein the pore forming agent is selected from carbon nano-tubes, carbon nano-fibres, activated carbon, resins, cellulose powder, and polymer spheres. US2022/0410129A1 also teaches a catalyst article for capturing particulate matter comprising a calcined porous washcoat deposited on a substrate, wherein the calcined porous washcoat comprising at least one platinum group metal and/or at least one non-platinum group metal supported on at least one support, wherein the calcined porous washcoat comprises pores of which 50% to 100% have a pore size ranging from 100 nm to 5.0 µm, wherein the size of the particulate matter ranges from 1.0 nm to 100 µm.

The present invention seeks to tackle at least some of the problems associated with the prior art or at least to provide a commercially acceptable alternative solution thereto. In particular, it is an object of the present invention to provide a catalytic GPF having improved (three-way) catalytic activity and/or improved filtration efficiency and/or reduced backpressure compared with existing catalytic GPFs.

According to a first aspect, the present invention provides a method for the manufacture of a catalytic gasoline particulate filter (GPF) for the treatment of exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
(ii) providing a first washcoat slurry comprising: (a) a polyacrylate, (b) a first platinum group metal selected from the group consisting of Pt, Pd, Rh and mixtures thereof, (c) a first oxygen storage capacity (OSC) material, and (d) a first inorganic oxide support;
(iii) providing a second washcoat slurry comprising: (a) an organic pore former, (b) optionally a second platinum group metal selected from the group consisting of Pt, Pd, Rh and mixtures thereof, (c) optionally a second oxygen storage capacity (OSC) material, and (d) optionally a second inorganic oxide support;
(iv) coating the wall-flow filter substrate with the first washcoat slurry from the second face to form a first coating disposed within the porous walls and extending from the second face for at least 50% of a length of the second plurality of channels;
(v) coating the wall-flow filter substrate with the second washcoat slurry from the first face to form a second coating disposed on the first plurality of inner surfaces and extending from the first face for at least 70% of a length of the first plurality of channels; and
(vi) calcining the first coating and the second coating to form the catalytic GPF.

The present inventors have found that the above method allows for the provision of a catalytic GPF having high catalytic activity and filtration efficiency, while maintaining low backpressure.

For instance, it has been found that the second ("on-wall") coating may advantageously improve the catalytic activity of the first ("in-wall") coating, even if the second coating does not include a PGM itself and/or is catalytically inert.

Moreover, the filtration efficacy of the catalytic GPF is comparable to that of a filter that is coated with a zeolite-based powder coating at similar backpressure, providing significant cost advantages.

According to a second aspect, the present invention provides a catalytic GPF for the treatment of exhaust gas from a gasoline engine, wherein the catalytic GPF is obtained or obtainable by the method of the first aspect.

According to a third aspect, the present invention provides an emission treatment system for the treatment of exhaust gas from a gasoline engine, wherein the emission treatment system comprises the catalytic GPF of the second aspect.

According to a fourth aspect, the present invention provides a method for treating an exhaust gas from a gasoline engine, the method comprising:
providing the catalytic GPF of the second aspect; and
contacting the catalytic GPF with an exhaust gas from a gasoline engine.

The present invention will now be described further. Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

The present invention provides a method for the manufacture of a catalytic gasoline particulate filter (GPF) for the treatment of exhaust gas from a gasoline engine. Preferably, the catalytic GPF is for three-way catalysis (TWC), i.e. the simultaneous conversion of CO, NOx and hydrocarbons.

The first step of the method comprises providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces. Such wall-flow filters are well known in the art. The first and second pluralities of inner surfaces define the porous walls. In use, the first face may be the "inlet" face and the second face may be the "outlet" face. Alternatively, the second face may be the "inlet" face and the first face may be the "outlet" face.

The wall-flow filter substrate can be a ceramic, e.g., silicon carbide, cordierite, aluminium nitride, silicon nitride, aluminium titanate, alumina, mullite, pollucite, or composites comprising segments of any two or more thereof. Cordierite, a magnesium aluminosilicate, and silicon carbide are particularly preferred.

The wall-flow filter substrate suitable for use in the present invention (i.e. before any coatings are applied) typically has a mean pore size of from 8 to 45 µm, for example 8 to 25 µm, or 10 to 20 µm. Pore size is well known in the art and appropriate measurement techniques are known to a person skilled in the art. The wall-flow filter substrate may have a porosity of 40 to 75%, such as 45 to 70%. The mean pore size may be determined using mercury porosimetry and x-ray tomography according to conventional methods.

The wall-flow filter substrate typically comprises a cell density of from 60 to 400 cells per square inch (cpsi). It is preferred that the wall-flow filter substrate comprises a cell density of from 100 to 350 cpsi, more preferably from 200 to 300 cpsi. The wall-flow filter substrate monolith may have a wall thickness (e.g. mean internal wall thickness) of from 0.20 to 0.50 mm, preferably from 0.25 to 0.35 mm (e.g. about 0.30 mm).

The second step of the method comprises providing a first washcoat slurry comprising: (a) a polyacrylate, (b) a first platinum group metal selected from the group consisting of Pt, Pd, Rh and mixtures thereof, (c) a first oxygen storage capacity (OSC) material, and (d) a first inorganic oxide support.

The term "polyacrylate" refers any polymer containing polymerized acrylic acid and/or its deprotonated form, depending on the pH of the media in which it is present. The polyacrylate can be a homopolymer or a copolymer. That is, in some embodiments, the polyacrylate is a homopolymer of acrylic acid or acrylate (i.e., the deprotonated form of acrylic acid). In other embodiments, the polyacrylate is a copolymer of acrylic acid or acrylate with one or more further monomer units. For instance, the polyacrylate may be a copolymer of acrylic acid or acrylate with one or more monomer units selected from acrylamides, acrylonitrile, or other compounds containing a vinyl functional group. In some embodiments, the polyacrylate has a weight average molecular weight (Mw) in its deprotonated form of from 800 to 4000, or from 1600 to 3200, or from 2500 to 3000 g/mol.

In an aqueous solution at neutral pH, the polyacrylate is an anionic polymer, i.e., many of the carboxylic side chains of the polymer lose their protons and acquire a negative charge. Partially or wholly deprotonated polyacrylates are polyelectrolytes, with the ability to absorb and retain water.

The first washcoat slurry may comprise the polyacrylate in an amount of from 2 to 10 wt%, or from 2 to 8 wt%, or from 3 to 6 wt% based on the total weight of the first washcoat slurry.

The present inventors have found that including a polyacrylate in the first washcoat slurry allows it to be more effectively localised within the porous walls of the substrate (i.e. to be disposed "in-wall") during the subsequent coating step, without a significant "on-wall" component (either on the surfaces of the channels to which it is applied, or on the surfaces of the other set of channels, where it may otherwise end up when the coating is "pulled through" the substrate through application of a vacuum). That is, greater washcoat location control is provided compared with a comparable washcoat that lacks the polyacrylate.

In some embodiments, the first platinum group metal (PGM) comprises Pd and Rh. In some embodiments, the first PGM comprises Pt and Rh. In some embodiments, the first PGM comprises Pt and Pd. The total PGM content of the first washcoat slurry may be from 0.005 to 10 wt%, or from 0.001 to 5 wt%, or from 0.05 to 3 wt%, based on the total weight of the first washcoat slurry.

The first PGM may be present in the first washcoat slurry as PGM ions. Alternatively, the first PGM may already be pre-fixed to the first OSC material and/or the first inorganic oxide support, i.e. therefore typically being present in the form of nanoparticles supported on the first OSC material and/or the first inorganic oxide support.

"Oxygen storage capacity" refers to the ability of materials used as oxygen storage capacity materials in catalysts to store oxygen under lean conditions and to release it under rich conditions. The first OSC material may be ceria, a mixed oxide comprising ceria, or a composite oxide comprising ceria. In some embodiments, the first OSC material is a mixed oxide of cerium and zirconium; a mixed oxide of cerium, zirconium, and aluminium; a mixed oxide of cerium, zirconium, and neodymium; or a mixed oxide of cerium, zirconium and praseodymium. The term "mixed oxide" as used herein generally refers to a mixture of oxides in a single phase, as is conventionally known in the art. Preferably, the first OSC material is ceria or a mixed oxide comprising ceria, preferably a ceria-zirconia mixed oxide and/or a ceria-zirconia-alumina mixed oxide. Preferably, the first OSC material is a ceria-zirconia mixed oxide in which the weight ratio of ZrO₂ to CeO₂ is from 4:1 to 1:1, more preferably about 2:1.

The first OSC material can be doped with a dopant. The dopant can be selected from the group consisting of La, Sr, Si, Ba, Y, Pr, Nd, and mixtures thereof. For example, the dopant can be Nd and/or Pr. The dopant content in the first OSC material can be from 1 to 30 wt%, from 2 to 25 wt%, or from 3 to 20 wt%, based on the total weight of the first inorganic oxide support and dopant.

In some embodiments, the first OSC material has a Dv50 of from 0.5 to 10 µm, from 1 to 6 µm, or from 2 to 4 µm. In some embodiments, the first OSC material has a Dv90 of from 2 to 15 µm, from 3 to 12 µm, or from 5 to 10 µm. In some embodiments, the first OSC material has a volume-weighted mean particle diameter of from 0.5 to 10 µm, from 1 to 6 µm, or from 2 to 4 µm.

Particle size distributions of solid particles can be characterized by the Dv10, Dv50 and Dv90 measurements. In each case the number indicates the percentage by volume of particles smaller than the recited value. In other words, a Dv90 of 1 µm means that 90% by volume of the particles are smaller than 1 µm in diameter. By knowing a Dv10 and a Dv90, the range of particles in a distribution of particles can be defined. The characterization of the particle size of a sample by its Dv10 and Dv90 values generally defines the breadth of the particle-size distribution. The closer these values are, the narrower the distribution of particle sizes.

The particle size measurements necessary to obtain Dv10, Dv50, Dv90 and mean diameter values of solid particles such as the first OSC material or the first inorganic oxide support can be obtained by Laser Diffraction Particle Size Analysis using a Malvern Mastersizer 3000, which applies a mathematical Mie theory model to determine a particle size distribution. The laser diffraction system works by determining diameters for the particles based on a spherical approximation. For the particle size measurements by Laser Diffraction Particle Size Analysis, diluted samples may be prepared by sonication in distilled water without surfactant for 30 seconds at 35 Watts. It will be appreciated that any Dv or mean values disclosed in relation to a given component are with respect to that component when it is incorporated into the (first or second) washcoat slurry.

In some embodiments, the first washcoat slurry comprises from 2 to 12 wt%, or from 2 to 8 wt%, or from 2.5 to 6 wt% of the first oxygen storage material based on the total weight of the first washcoat slurry.

In some embodiments, the first inorganic oxide support is an oxide of one or more elements from Group 2, 3, 4, 5, 13 and/or 14. The first inorganic oxide support is preferably a refractory oxide. Refractory oxides exhibit chemical and physical stability at high temperatures, such as the temperatures associated with gasoline engine exhaust. The first inorganic oxide support can be selected from the group consisting of alumina, silica, titania, and mixed oxides or composite oxides thereof. In some embodiments, the first inorganic oxide support is an alumina.

The first inorganic oxide support can be doped with a dopant. The dopant can be selected from the group consisting of La, Sr, Si, Ba, Y, Pr, Nd, Ce, and mixtures thereof. For example, the dopant can be La. The dopant content in the first inorganic oxide support can be from 1 to 30 wt%, from 2 to 25 wt%, or from 3 to 20 wt%, based on the total weight of the first inorganic oxide support and dopant.

The amount of the first inorganic oxide support in the first washcoat slurry can be from 0.5 to 5 wt% or from 1 to 3 wt% based on the total weight of the first washcoat slurry.

The first inorganic oxide support may have a Dv90 of from 1 to 12 µm, from 1.5 to 10 µm, or from 2 to 8 µm.

The first inorganic oxide support may have a Dv50 of from 0.1 to 20 µm, from 0.5 to 10 µm, or from 1 to 5 µm.

The first inorganic oxide support may have a volume-weighted mean particle diameter of from 0.1 to 20 µm, from 0.5 to 10 µm, or from 1 to 5 µm.

The first OSC material and the first inorganic oxide support in the first washcoat slurry can have a weight ratio of from 1:1 to 8:1, or from 1.5:1 to 6:1, or from 2:1 to 4:1.

The first washcoat slurry typically comprises a solvent. Water and organic solvents (methanol, ethanol, propanol, and the like) or their mixtures can be used. Preferably, the solvent comprises, more preferably is, water. In other words, the first washcoat slurry is preferably an aqueous slurry. The term "washcoat slurry" as used herein is a term of art and typically refers to a suspension, preferably an aqueous suspension, of the components of the washcoat slurry.

The first washcoat slurry preferably has a viscosity of less than 500 cP at 20 °C, more preferably less than 300 cP, still more preferably less than 150 cP. Such viscosities (which are generally lower than those targeted for the second washcoat slurry) may help to direct the first washcoat slurry "in-wall" during the subsequent coating step. The viscosity may be measured on a Brookfield TM RV DVII+ Extra Pro viscometer using a SC4-27 spindle at 50 rpm spindle speed.

In some embodiments, the first washcoat slurry has a solids content of from 10 to 50 wt%, or from 15 to 40 wt%, based on the total weight of the first washcoat slurry.

The step of providing a first washcoat slurry preferably comprises combining a polyacrylate source, the first PGM (or, if present as PGM ions, a source of the PGM ions), the first OSC material, the first inorganic oxide support, and a solvent (e.g. water).

The source of PGM ions preferably comprises one or more PGM salts, such as PGM nitrate, PGM acetate and/or PGM carbonate.

In some embodiments, the polyacrylate source is an ammonium polyacrylate, as shown in the formula below.

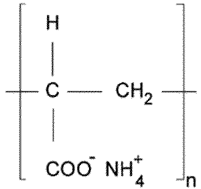

The weight average molecular weight (Mw) of the ammonium polyacrylate can be from 1000 to 5000, or from 2000 to 4000, or from 3200 to 3800 g/mol.

The polyacrylate source can be an aqueous solution of ammonium polyacrylate, preferably comprising from 10 to 50 wt% ammonium polyacrylate based on the total weight of the solution. The aqueous solution of ammonium polyacrylate may have a pH of from 7 to 10, or from 8 to 9.5.

Suitable polyacrylate sources include Dispex^{®} AA 4040 and Dispex^{®} CX 4240, which are aqueous solutions of an ammonium polyacrylate and are commercially available from BASF. Dispex^{®} AA 4140 is the sodium salt of the same polymer as Dispex^{®} AA 4040.

The third step of the method comprises providing a second washcoat slurry comprising: (a) an organic pore former, (b) optionally a second platinum group metal selected from the group consisting of Pt, Pd, Rh and mixtures thereof, (c) optionally a second oxygen storage capacity (OSC) material, and (d) optionally a second inorganic oxide support.

In some embodiments, the second washcoat slurry comprises none of components (b) to (d). Such washcoat slurries can be used to form catalytically inert coatings that do not catalyse the conversion of NOx, hydrocarbons or CO in an exhaust gas. In other embodiments, one or more of (b) to (d), for instance all of (b) to (d), are present.

Suitable organic pore formers are known in the art. The organic pore former may be selected from the group consisting of cellulose, polyethylene, starch, graphite, polypropylene, polyaramide, polytetrafluoroethylene, polystyrene, polymethyl methacrylate (PMMA), and mixtures thereof. The source of the cellulose may, for instance, be cellulose powder or cellulose fibers. Commercially available organic pore formers include Arbocel^{®} (such as Arbocel^{®} UFC 100), Vivapur^{®}, Mipelon^{™} PM-200, Propyltex^{®}, Orgasol^{®}, and Remyrise^{®}.

The organic pore former may have a Dv50 in a range of from 1 to 30 µm, preferably from 2 to 25 µm, more preferably from 3 to 20 µm, even more preferably from 4 to 18 µm, and most preferably from 6 to 12 µm.

In some embodiments, the organic pore former is cellulose obtained from a cellulose powder. Preferably, the cellulose powder has a D50 in the range of 6 to 12 µm.

In some embodiments, the second washcoat slurry comprises from 5 to 45 wt%, or from 6 to 30 wt%, or from 8 to 25 wt%, or from 10 to 20 wt% of the organic pore former based on the total weight of the second washcoat slurry. The present inventors have found that including excessive amounts of pore former may reduce the adhesion of the resulting coating to the substrate.

In some embodiments, the second platinum group metal (PGM) comprises Pd and Rh. In some embodiments, the second PGM comprises Pt and Rh. In some embodiments, the first PGM comprises Pt and Pd. The total PGM content of the second washcoat slurry may be from 0.005 to 10 wt%, from 0.001 to 5 wt%, or from 0.05 to 3 wt%, based on the total weight of the second washcoat slurry. The second PGM, where present, may be the same as or different from the first PGM.

The second PGM may be present in the second washcoat slurry as PGM ions. Alternatively, the second PGM may already be pre-fixed to the second OSC material and/or the second inorganic oxide support, i.e. therefore typically being present in the form of nanoparticles supported on the second OSC material and/or the second inorganic oxide support.

The second OSC material may be ceria, a mixed oxide comprising ceria, or a composite oxide comprising ceria. In some embodiments, the second OSC material is a mixed oxide of cerium and zirconium; a mixed oxide of cerium, zirconium, and aluminium; a mixed oxide of cerium, zirconium, and neodymium; or a mixed oxide of cerium, zirconium and praseodymium. Preferably, the second OSC material is ceria or a mixed oxide comprising ceria, preferably a ceria-zirconia mixed oxide and/or a ceria-zirconia-alumina mixed oxide. Preferably, the second OSC material is a ceria-zirconia mixed oxide in which the weight ratio of ZrO₂ to CeO₂ is from 4:1 to 1:1, more preferably about 2:1.

The second OSC material can be doped with a dopant. The dopant can be selected from the group consisting of La, Sr, Si, Ba, Y, Pr, Nd, and mixtures thereof. For example, the dopant can be Nd and/or Pr. The dopant content in the second OSC material can be from 1 to 30 wt%, from 2 to 25 wt%, or from 3 to 20 wt%, based on the total weight of the first inorganic oxide support and dopant.

In some embodiments, the second OSC material has a Dv50 of from 1 to 10 µm, from 2 to 8 µm, or from 3 to 6 µm. In some embodiments, the second OSC material has a Dv90 of from 2 to 30 µm, from 5 to 25 µm, or from 10 to 20 µm. In some embodiments, the second OSC material has a volume-weighted mean particle diameter of from 1 to 10 µm, from 2 to 8 µm, or from 3 to 6 µm. The particle sizes may be determined as described above.

In some embodiments, the second washcoat slurry comprises from from 2 to 8 wt%, or from 2.5 to 6 wt% of the second oxygen storage material based on the total weight of the second washcoat slurry.

The second oxygen storage material, where present, may be the same as or different from the first oxygen storage material.

In some embodiments, the second inorganic oxide support is an oxide of one or more elements from Group 2, 3, 4, 5, 13 and/or 14. The second inorganic oxide support is preferably a refractory oxide. The second inorganic oxide support can be selected from the group consisting of alumina, silica, titania, and mixed oxides or composite oxides thereof. In some embodiments, the second inorganic oxide support is an alumina.

The second inorganic oxide support can be doped with a dopant. The dopant can be selected from the group consisting of La, Sr, Si, Ba, Y, Pr, Nd, Ce, and mixtures thereof. For example, the dopant can be La. The dopant content in the second inorganic oxide support can be from 1 to 30 wt%, from 2 to 25 wt%, or from 3 to 20 wt%, based on the total weight of the second inorganic oxide support and dopant.

The amount of the second inorganic oxide support in the second washcoat slurry can be from 0.5 to 5 wt% or from 1 to 3 wt% based on the total weight of the second washcoat slurry.

The second inorganic oxide support may have a Dv90 of from 5 to 50 µm, from 8 to 40 µm, or from 10 to 30 µm.

The second inorganic oxide support may have a Dv50 of from 1 to 10 µm, from 2 to 8 µm, or from 3 to 7 µm.

The second inorganic oxide support may have a volume-weighted mean particle diameter of from 1 to 10 µm, from 2 to 8 µm, or from 3 to 7 µm.

The second inorganic oxide support, where present, may be the same as or different from the first inorganic oxide support.

The second OSC material and the second inorganic oxide support in the first washcoat slurry can have a weight ratio of from 1:1 to 8:1, or from 1.5:1 to 6:1, or from 2:1 to 4:1.

In some embodiments, the second washcoat slurry further comprises citric acid, preferably in amount of from 1 to 12 wt%, or from 2 to 10 wt%, or from 3 wt% to 8 wt% based on the total weight of the second washcoat slurry. The citric acid may help to disperse the optional second PGM and/or the optional second OSC. Alternatively or in addition, the citric acid may act as a pore former when the second washcoat slurry is applied to the substrate at relatively low washcoat loading. As used herein, the term "citric acid" encompasses the deprotonated form i.e. citrate ions.

In some embodiments, the second washcoat slurry has a solids content of from 2 to 30 wt%, or from 8 to 20 wt%, based on the total weight of the second washcoat slurry.

It is to be understood that the second washcoat slurry has a different chemical composition from that of the first washcoat slurry (i.e. the components that make up the slurries and/or the respective amounts of the components in the slurries are preferably different). Preferably, the second washcoat slurry does not comprise a polyacrylate. Preferably, the first washcoat slurry does not comprise an organic pore former.

The second washcoat slurry typically comprises a solvent as set out above in relation to the first washcoat slurry.

The second washcoat slurry preferably has a viscosity of at least 200 cP at 20 °C, more preferably at least 500 cP, still more preferably at least 800 cP. Such viscosities (which are generally greater than those targeted for the first washcoat slurry) may help to maintain the first washcoat slurry "on-wall" during the subsequent coating step. The viscosity may be measured as set out above.

The step of providing a second washcoat slurry preferably comprises combining an organic pore former, a solvent (e.g. water), optionally a second PGM (or, if present as PGM ions, a source of the PGM ions), optionally a second OSC material, and optionally a second inorganic oxide support.

The fourth step of the method comprises coating the wall-flow filter substrate with the first washcoat slurry from the second face to form a first coating disposed within the porous walls and extending from the second face for at least 50% of a length of the second plurality of channels. That is, the first coating is disposed "in-wall". Suitable techniques for coating a wall-flow filter substrate with a washcoat slurry to form a coated substrate are known in the art. Suitable coating procedures are described in WO1999047260 A1 and in GB2524662 A, the contents of which are incorporated herein by reference in their entirety. It may happen that a small amount of the first washcoat slurry may be present on the first plurality of inner surfaces and/or the second plurality of inner surfaces following the coating step, but this should be avoided as much as possible. Preferably, at least 80 wt% of the first coating is within the porous walls, more preferably at least 90 wt%, still more preferably at least 95 wt%. The presence of polyacrylate in the first washcoat slurry helps to drive the first coating in-wall without it additionally coating the first or second pluralities of inner surfaces to any significant degree. Further adjustments to the washcoat formulation to help achieve an in-wall coating are known to those skilled in the art, for instance by employing a relatively low viscosity slurry with finer material (especially the supported PGMs) to allow the washcoat to more readily infiltrate the porous substrate.

In some embodiments, the first coating extends for at least 60% of a length of the second plurality of channels, or for at least 65%, or for at least 70%. In some embodiments, the first coating extends from the second face for at most 90% of a length of the second plurality of channels, or at most 80%. In other embodiments, however, the first coating extends for the entire length of the second plurality of channels. "Full-length" first coatings are preferable in terms of catalytic activity but may result in extended drying times being required.

The fifth step of the method comprises coating the wall-flow filter substrate with the second washcoat slurry from the first face to form a second coating disposed on the first plurality of inner surfaces and extending from the first face for at least 70% of a length of the first plurality of channels. That is, the second coating is disposed "on-wall". By "disposed on" it is meant that the second coating is directly disposed on the substrate, i.e. with no intervening material, and/or indirectly disposed on the substrate, i.e. with intervening material. Preferably, however, the second coating is directly disposed on the first plurality of inner surfaces. It may happen that a small amount of the second washcoat slurry may penetrate into the surface pores of the wall-flow filter during coating. However, this should be avoided as much as possible. Preferably, at least 80 wt% of the second coating is on the first plurality of inner surfaces, more preferably at least 90 wt%, still more preferably at least 95 wt%. Preferably, the wall-flow monolith has a channel wall thickness and the second coating penetrates to less than 10%, more preferably less than 5% of the channel wall thickness at any given point.

In some embodiments, the second coating extends from the first face for at least 75% of a length of the first plurality of channels, or at least 80%, or at least 85%. In some embodiments, the second coating extends from the first face for at most 95% of a length of the first plurality of channels, or for at most 90%. In other embodiments, however, the second coating extends for the entire length of the second plurality of channels. "Full-length" second coatings are preferable in terms of filtration efficacy but may result in extended drying times being required.

In some embodiments, the first coating extends from the second face for from 50% to 80% of a length of the second plurality of channels and the second coating extends from the first face for from 70 to 90% of a length of the first plurality of channels.

It is preferable that each "coating" has a substantially uniform composition (i.e. there is no substantial difference in the composition of the coating when comparing one part of the region occupied by the coating with another part of that region, on average). Substantially uniform composition in this context refers to a material (e.g., region) where the difference in composition when comparing one part of the region with another part of the region is 5% or less, usually 2.5% or less, and most commonly 1 % or less, for each component of the coating on a wt.% basis relative to the total weight of the part of the region. In other words, preferably, in an arbitrarily selected region of the coating, the content of each component of the coating, in wt.% relative to the total weight of the arbitrarily selected region of the coating, is 5% or less, usually 2.5% or less, and most commonly 1% or less, even more preferably 0.1% or less, as compared with the total wt.% of that component of the coating in the coating.

The fourth step is preferably carried out before the fifth step, i.e. the first coating is preferably formed before the second coating. In other, less preferred, embodiments, the fifth step is carried out before the fourth step.

The sixth step of the method comprises calcining the first coating and the second coating to form the catalytic GPF. In some embodiments, the first coating is calcined before the second coating is formed. In other embodiments (i.e. in which the fifth step is performed before the fourth step), the second coating is calcined before the first coating is formed. In other embodiments, both coatings are calcined in a single step (i.e. after both coatings have been formed). Calcining fixes the coatings to the substrate and causes the organic pore former to burn off, thereby introducing pores into the second coating. The polyacrylate in the first coating is also burnt off, typically decomposing to form gaseous ammonia. Calcining is well-known in the art and may be carried out under usual conditions, e.g. in air or an inert atmosphere, typically air. Calcining may be carried out, for instance, a temperature of from 400 to 600 °C (e.g. about 500 °C) for from 5 to 60 minutes.

In some embodiments, the or each calcining step may be preceded by a drying step at a lower temperature, such as from 100 to 200 °C. In some embodiments, the method comprises, in succession: coating the wall-flow filter substrate with the first washcoat slurry to form the first coating as described above; optionally drying the first coating; optionally calcining the first coating; coating the substrate with the second washcoat slurry to form the second coating as described above; optionally drying the second coating; and calcining the second coating to form the catalytic GPF.

After calcination, at least a portion of the PGM in each coating is typically supported on the respective inorganic oxide support and/or OSC material. The term "supported on" as used herein may encompass that the component, typically in the form of nanoparticles, is directly in contact, and physical and/or chemically bound to the surface of the supporting material. The term "surface of the supporting material" may encompass the surface of the pores within a porous support material, such as an inorganic oxide support and/or OSC material, for example.

The first coating loading after calcination can be in the range of from 0.5 to 5 g/in³ , or from 1 to 2 g/in³.

The second coating loading after calcination can be in the range of from 0.05 to 2 g/in³, or from 0.1 to 1 g/in³.

The ratio of the first coating loading to the second coating loading, both after calcination, is preferably from 1:1 to 10:1, or from 2:1 to 6:1.

In some embodiments, the weight ratio of the total PGM loading provided by the first coating to the total PGM loading provided by the second coating is from 1:1 to 4:1, or from 1.5:1 to 3:1.

In some embodiments, the weight ratio of the total inorganic oxide support loading provided by the first coating to the total inorganic oxide support loading provided by the second coating is from 2:1 to 1:8, or from 1:1 to 1:5.

In some embodiments, the weight ratio of the total OSC material loading provided by the first coating to the total OSC material loading provided by the second coating is 2:1 to 1:8, or from 1:1 to 1:5.

The term "loading" as used herein has the conventional meaning in the art. That is, the loading of a coating or substance is defined as the weight of the coating or substance after calcination relative to the total volume of the uncoated wall-flow filter.

In some embodiments, the catalytic GPF comprises one or more further coatings, such as second, third, etc. coatings. In other embodiments, the catalytic GPF consists of the wall-flow filter substrate, the first coating and the second coating. Such a configuration may assist in keeping the backpressure low.

In a second aspect, the present invention provides a catalytic GPF obtained or obtainable by the method of the above aspect. As will be appreciated by the skilled reader, the advantages and preferable features of the above aspects apply equally to this aspect, unless specified otherwise.

In a third aspect, the present invention provides an emission treatment system for the treatment of exhaust gas from a gasoline engine, wherein the emission treatment system comprises the catalytic GPF of the above aspects. As will be appreciated by the skilled reader, the advantages and preferable features of the above aspects apply equally to this aspect, unless specified otherwise. The first face of the catalytic GPF (as described above in relation to the first aspect) may be upstream of the second face (i.e. closer to the engine). Preferably, the gasoline engine operates under stoichiometric conditions.

In some embodiments, the emission treatment system may comprise additional components such as a three-way catalyst (TWC) containing a TWC composition applied to a honeycomb flow-through substrate and disposed either upstream or downstream of the catalytic GPF, preferably upstream.

In a fourth aspect, the present invention provides a method of treating an exhaust gas from a gasoline engine, the method comprising:
providing the catalytic GPF of the above aspects; and
contacting the catalytic GPF with an exhaust gas from a gasoline engine.

Typically, contacting the catalytic GPF with an exhaust gas may comprise flowing the exhaust gas through the catalytic GPF. The first face of the catalytic GPF (as described above in relation to the first aspect) may be upstream of the second face. Preferably, the gasoline engine operates under stoichiometric conditions.

The present invention will now be described in relation to the following non-limiting Figures:

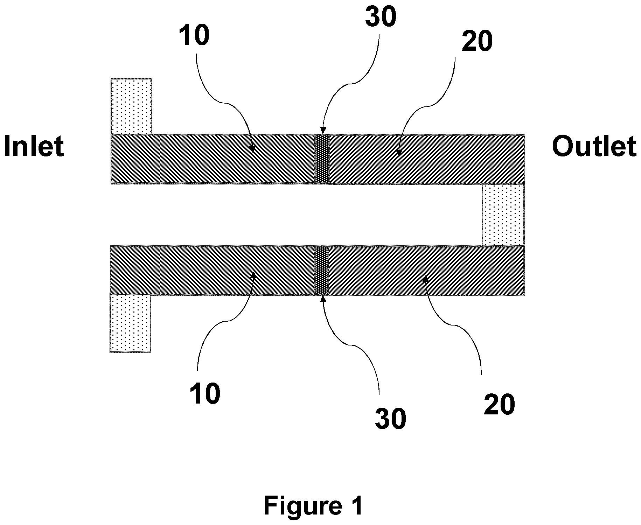

**Figures 1-3** are schematic diagrams of the three catalytic GPFs prepared in Example 1.
**Figure 1** corresponds to GPF-A. The catalytic GPF includes a predominantly in-wall coating (10) resulting from the application of washcoat slurry A-1 from the inlet face and another predominantly in-wall coating (20) resulting from the application of washcoat slurry A-1 from the outlet face. There is a region of overlap (30) between the two coatings.

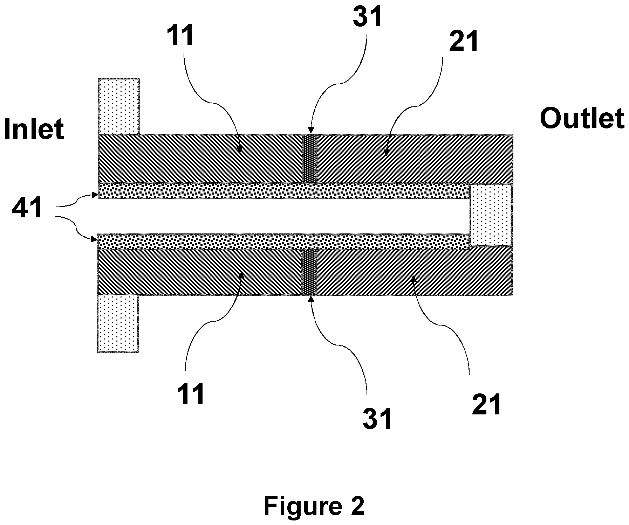

**Figure 2** corresponds to GPF-B. The catalytic GPF includes a predominantly in-wall coating (11) resulting from the application of washcoat slurry A-1 from the inlet face and another predominantly in-wall coating (21) resulting from the application of washcoat slurry A-1 from the outlet face. There is a region of overlap (31) between the two coatings. An on-wall powder coating (41) is additionally provided on the inlet channels.

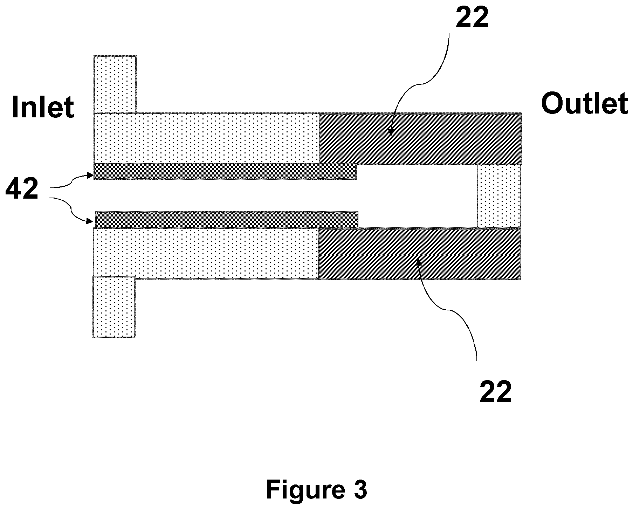

**Figure 3** corresponds to GPF-C. The catalytic filter has a zoned arrangement. It includes a predominantly in-wall coating (22) extending for a portion of the substrate length resulting from the application of washcoat slurry C-1 from the outlet face. It further includes a predominantly on-wall coating (42) on the inlet channels extending for a portion of the substrate length resulting from the application of washcoat slurry B-1 from the inlet face.

The present invention will now be described in relation to the following non-limiting Examples.

### Example 1

### Preparation of washcoat slurries and catalytic GPFs

### WASHCOAT SLURRY A-1

A washcoat slurry A-1 containing Pt nitrate, Rh nitrate, a cerium-zirconium mixed oxide (mean particle diameter 7 µm), a gamma phase alumina (mean particle size 5 µm), ammonium polyacrylate (Dispex AA 4040), and water was prepared. The slurry had a solids content of 25% and a viscosity of <150 cP, as measured at 20 °C on Brookfield TM RV DVII+ Extra Pro viscometer using a SC4-27 spindle at 50 rpm spindle speed.

### GPF-A (Comparative)

Washcoat slurry A-1 prepared above was coated from both the inlet and outlet face of a cordierite wall-flow honeycomb filter substrate (300 cells per square inch; mean pore size 17 µm; porosity 66%) using a coating procedure described in GB2524662. A pre-determined amount of the slurry was deposited at an upper end of the filter substrate using a slurry dosing head. The dosing head had a plurality of apertures arranged to dispense the slurry onto the upper end face of the filter substrate. The channels having open ends at the upper end of the filter substrate were coated with the pre-determined amount of the slurry by applying a vacuum to a lower end of the filter substrate to draw the slurry along the channels. The filter substrate was then dried, then inverted and the procedure repeated to coat the channels having open ends at the opposite end of the filter substrate.

The coating length on the inlet channels is about 55% of the substrate length. The coating length on the outlet channels is about 55% of the substrate length. Each of the coatings is predominantly in-wall. The coated substrate was dried at 110 °C, and calcined at 500 °C to produce the catalytic GPF.

The catalytic GPF thus produced has a washcoat loading of 1.6 g/in³, Pt loading of 25 g/ft³, and Rh loading of 5 g/ft³.

### GPF-B (Comparative)

GPF-B was prepared by following the same procedure as for preparing GPF-A, except that a powder coating (comprising zeolite and binder) was dosed post calcination of the coated brick.

The catalytic GPF thus produced has a washcoat loading of 1.6 g/in³, Pt loading of 25 g/ft³, and Rh loading of 5 g/ft³.

### WASHCOAT SLURRY B-1

A washcoat slurry B-1 containing a gamma phase alumina (mean particle size 12 µm), a cellulose organic pore former (Arbocel UFC100), citric acid and water was prepared. The slurry had a solids content of 10% and a viscosity of ca. 1000 cP, as measured at 20 °C on Brookfield TM RV DVII+ Extra Pro viscometer using a SC4-27 spindle at 50 rpm spindle speed.

### WASHCOAT SLURRY C-1

A washcoat slurry C-1 containing Pt nitrate, Rh nitrate, a cerium-zirconium mixed oxide (mean particle size 7 µm), a gamma phase alumina (mean particle size 5 µm), ammonium polyacrylate (Dispex AA 4040), and water was prepared. The slurry had a solids content of 33% and a viscosity of <150 cP, as measured at 20 °C on Brookfield TM RV DVII+ Extra Pro viscometer using a SC4-27 spindle at 50 rpm spindle speed.

### GPF-C

Washcoat slurries B-1 and C-1 prepared above were coated from the inlet and outlet face, respectively, of a cordierite wall-flow honeycomb filter substrate (300 cells per square inch; mean pore size 17 µm; porosity 66%) using a coating procedure described in GB2524662. A pre-determined amount of the washcoat slurry B-1 was deposited at an upper end of the filter and a pre-determined amount of the washcoat slurry C-1 was deposited on the opposite face end of the filter substrate using a slurry dosing head. The dosing head had a plurality of apertures arranged to dispense the appropriate slurries onto the upper end face of the filter substrate. The channels having open ends at the upper end of the filter substrate were coated with the pre-determined amount of the slurry C-1 by applying a vacuum to a lower end of the filter substrate to draw the slurry along the channels. The filter substrate was dried, then inverted and the channels with open ends at the opposite end of the filter substrate coated with the pre-determined amount of slurry B-1, again with the application of a vacuum to draw the slurry along the channels.

The coating (washcoat slurry B-1) length on the inlet channels is about 88% of the substrate length and the coating is predominantly "on-wall". The coating (washcoat slurry C-1) length on the outlet channels is about 73% of the substrate length and the coating is predominantly "in-wall". The coated substrate was dried at 110°C after each dose of washcoat slurry, and calcined at 500 °C to produce the GPF.

The catalytic GPF thus produced has a washcoat loading of 1.6 g/in³, Pt loading of 25 g/ft³, and Rh loading of 5 g/ft³. The predominantly on-wall coating is porous and inert, but could made catalytic if desired by including PGMs and finetuning the support material ratio if necessary.

A summary of the coating configurations is provided in the following table:

**Table 1: Characteristics of each of the catalytic filters prepared in Example 1**

| **Catalytic GPF** | **Brief description of coating components** |
|---|---|
| GPF-A | In-wall TWC |
| GPF-B | In-wall TWC + powder coating |
| GPF-C | Zoned in-wall TWC with inert porous on-wall coating |

Schematic diagrams of the catalytic GPFs are provided in Figures 1-3.

### Example 2

### Backpressure testing

The cold flow backpressure (CFBP) was measured by placing the catalytic GPFs prepared in accordance with Example 1 in a precision foam tooling and precision foam tooling adapter onto an SF-1020PB flowbench which measures the CFBP at 600 m²/h using intake air flow direction. The Delta P (percentage increase from the bare substrate cold flow backpressure) were determined for each of the catalytic GPFs prepared in Example 1. The results are shown in the following table:

**Table 2: Backpressure testing results for each of the catalytic GPFs prepared in accordance with Example 1**

| **Sample** | **Cold flow backpressure (mBar)** | **Delta P (%)** |
|---|---|---|
| GPF-A | 31.0 | 29.3 |
| GPF-B | 38.7 | 61.3 |
| GPF-C | 39.1 | 62.9 |
| GPF-C (Reversed*) | 37.3 | 55.4 |

| | | |
|---|---|---|
| * By "reversed" it is meant that the part was tested in reverse orientation, i.e. the "outlet" face as shown in Fig. 1 was disposed upstream in the testing apparatus. | | |

Conclusion: GPF-A, which is a purely "in-wall" product, has the lowest CFBP response, whereas GPF-C, which has an on-wall porous coating on the inlet and an in-wall coating on the outlet, observed a 32% increase in delta P due to the on-wall inlet coating. The GPF-C CFBP response is slightly alleviated when tested in reverse. GPF-B was powder coated to match the GPF-C CFBP for comparative performance and filtration testing.

### Example 3

### Engine evaluation

The catalytic GPF samples prepared in accordance with Example 1 were evaluated fresh on an Audi 2.0L EA888 Gen 3 MLB evo engine in the underfloor (UF) position, with a coated TWC brick in the close-coupled (CC-1) upstream position. Emission (MEXA) sensors were place before and after the TWC CC-1 brick at the mid-bed (MB) position and post the GPF UF at the tailpipe (TP) position, the particulate number (PN) analyser was placed at the TP.

### Fresh PN

**Table 3: Fresh Filtration Efficiency for each of the catalytic GPFs prepared in accordance with Example 1**

| **Sample** | **Fresh Filtration Efficiency (%)** |
|---|---|
| GPF-A | 56.4 |
| GPF-B | 66.8 |
| GPF-C | 67.9 |
| GPF-C (Reversed) | 64.3 |

Conclusion: GPF-B and GPF-C have higher fresh filtration efficiencies (FE) than GPF-A, confirming that the porous coating of GPF-C has boosted FE and matching that of the powder coated GPF-B at similar cold flow backpressures. As expected, GPF-C when reversed - which had a lower CFBP - also had a slightly lower FE.

### Fresh activity - conversion

**Table 4: Fresh activity (CO, THC and NOx conversion) for each of the catalytic GPFs prepared in accordance with Example 1**

| **Sample** | **CO conversion (%)** | **THC conversion (%)** | **NOx conversion (%)** |
|---|---|---|---|
| GPF-A | 74 | 34 | 27 |
| GPF-B | 80 | 34 | 72 |
| GPF-C | 74 | 32 | 60 |
| GPF-C (Reversed) | 71 | 27 | 58 |

Conclusion: GPF-C has a +30% NOx conversion benefit over GPF-A, even though the porous on-wall coating is inert. Without wishing to be bound by theory, it is believed that the porous on-wall coating (with which the tailpipe emissions must interact rather than immediately go through the porous walls of the substrate) may in effect direct the tailpipe emissions to the rear of the substrate, which lacks the porous on-wall coating and therefore provides a more favourable path through the substrate for the tailpipe emissions. Because the majority of the catalytic components in the in-wall coating are concentrated towards the rear of GPF-B (whereas they are evenly dispersed along the axial length of GPF-A), the contact between the tailpipe emissions and the catalytic material (and hence the NOx conversion) are improved.

The observed catalytic activity of GPF-C is a little lower than that of GPF-B. It is believed that this is because the porous coating on GPF-B is zoned, whereas in GPF-C the powder coating (which is essentially an inert "on-wall" coating) is coated along the entire length of the inlet channels. A "full-length" on-wall coating would further prevent the tailpipe emissions from immediately going through the porous walls of the substrate, ultimately further increasing the contact time with the catalytic in-wall material.

### Engine aged PN

The catalytic GPF samples were aged in the UF positions with identical TWC in the CC-1 position on a Ford Cyclone engine under the GMAC875 protocol which includes a CC-1 catalyst inlet temperature of 875 °C for 100 hours.

**Table 5: Engine aged filtration efficiency for GPF-B and GPF-C prepared in accordance with Example 1**

| **Sample** | **Engine Aged Filtration Efficiency (%)** |
|---|---|
| GPF-B | 97.5 |
| GPF-C | 98.5 |

### Engine aged (100 hrs) activity - conversion

The engine aged GPF samples were evaluated on a JLR NS AJ20 P4 engine in the underfloor (UF) position, with a coated TWC brick in the close-coupled (CC-1) upstream position. Emission (MEXA) sensors were place before and after the TWC CC-1 brick at the mid-bed (MB) position and post the GPF UF at the tailpipe (TP) position. The PN analyser was placed at the TP.

**Table 6: Aged activity (CO, THC and NOx conversion) for GPF-B and GPF-C prepared in accordance with Example 1**

| **Sample** | **CO conversion (%)** | **THC conversion (%)** | **NOx conversion (%)** |
|---|---|---|---|
| GPF-B | 39.8 | 96.3 | 90.1 |
| GPF-C | 33.1 | 96.5 | 88.4 |

### Engine aged (100 hrs) activity - light-off temperature

The engine aged GPFs were evaluated on a JLR NS AJ20 P4 engine in the underfloor (UF) position, where the inlet and outlet temperature of the GPFs were recorded as where the emissions.

**Table 7: Aged activity (CO, THC and NOx conversion) for GPF-B and GPF-C prepared in accordance with Example 1**

| | **GPF-B** | **GPF-C** |
|---|---|---|
| **T50 NOx (°C)** | 408.3 | 411.1 |
| **T50 CO (°C)** | 417.6 | 423.4 |
| **T50 THC (°C)** | 421.3 | 427.1 |

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A method for the manufacture of a catalytic gasoline particulate filter (GPF) for the treatment of exhaust gas from a gasoline engine, the method comprising:
(i) providing a wall-flow filter substrate having porous walls and having a first face and a second face defining a longitudinal direction therebetween and first and second pluralities of channels extending in the longitudinal direction, wherein the first plurality of channels is open at the first face and closed at the second face, and wherein the second plurality of channels is open at the second face and closed at the first face, wherein the first plurality of channels provide a first plurality of inner surfaces and wherein the second plurality of channels provide a second plurality of inner surfaces;
(ii) providing a first washcoat slurry comprising: (a) a polyacrylate, (b) a first platinum group metal selected from the group consisting of Pt, Pd, Rh and mixtures thereof, (c) a first oxygen storage capacity (OSC) material, and (d) a first inorganic oxide support;
(iii) providing a second washcoat slurry comprising: (a) an organic pore former, (b) optionally a second platinum group metal selected from the group consisting of Pt, Pd, Rh and mixtures thereof, (c) optionally a second oxygen storage capacity (OSC) material, and (d) optionally a second inorganic oxide support;
(iv) coating the wall-flow filter substrate with the first washcoat slurry from the second face to form a first coating disposed within the porous walls and extending from the second face for at least 50% of a length of the second plurality of channels;
(v) coating the wall-flow filter substrate with the second washcoat slurry from the first face to form a second coating disposed on the first plurality of inner surfaces and extending from the first face for at least 70% of a length of the first plurality of channels; and
(vi) calcining the first coating and the second coating to form the catalytic GPF.

2. A method according to claim 1, wherein the polyacrylate is a homopolymer of acrylic acid or acrylate.

3. A method according to claim 1, wherein the polyacrylate is a copolymer of acrylic acid or acrylate and another monomer unit.

4. A method according to claim 1 or claim 2, wherein the polyacrylate has a weight average molecular weight (Mw) of from 800 to 4,000 g/mol.

5. A method according to any of the preceding claims, wherein the organic pore former is selected from the group consisting of cellulose, polyethylene, starch, graphite, polypropylene, polyaramide, polytetrafluoroethylene, polystyrene, polymethyl methacrylate, and mixtures thereof.

6. A method according to claim 5, wherein the organic pore former is cellulose.

7. A method according to any of the preceding claims, wherein the first coating extends from the second face for from 60 to 90% of a length of the second plurality of channels.

8. A method according to any of the preceding claims, wherein the second coating extends from the first face for from 75 to 95% of a length of the first plurality of channels.

9. A method according any of claims 1 to 6, wherein the first coating extends from the second face for 100% of a length of the second plurality of channels, and wherein the second coating extends from the first face for 100% of a length of the first plurality of channels.

10. A method according to any of the preceding claims, wherein after the calcining step, the first coating and the second coating are present in a weight ratio of from 1:1 to 10:1.

11. A method according to any of the preceding claims, wherein when the second washcoat slurry comprises a second platinum group metal, the weight ratio after calcination of the total platinum group metal loading provided by the first coating to the total platinum group metal loading provided by the second coating is from 1:1 to 4:1.

12. A method according to any of the preceding claims, wherein the catalytic GPF consists of the wall-flow substrate, the first coating and the second coating.

13. A catalytic GPF for the treatment of exhaust gas from a gasoline engine, wherein the catalytic GPF is obtained or obtainable by the method of any of the preceding claims.

14. An emission treatment system for the treatment of exhaust gas from a gasoline engine, wherein the emission treatment system comprises the catalytic GPF of claim 13.

15. A method for treating an exhaust gas from a gasoline engine, the method comprising:
providing the catalytic GPF of claim 13; and
contacting the catalytic GPF with an exhaust gas from a gasoline engine.
